Europäisches Patentamt

European Patent Office

Office européen des brevets

(19)

(11) Veröffentlichungsnummer: **0 012 837**
**A1**

(12) **EUROPÄISCHE PATENTANMELDUNG**

(21) Anmeldenummer: **79104563.6**

(22) Anmeldetag: **19.11.79**

(51) Int. Cl.³: **C 01 B 21/096**

(30) Priorität: **24.11.78 DE 2850903**

(43) Veröffentlichungstag der Anmeldung:
**09.07.80 Patentblatt 80/14**

(84) Benannte Vertragsstaaten:
**BE DE FR GB IT NL**

(71) Anmelder: **HOECHST AKTIENGESELLSCHAFT**
**Zentrale Patentabteilung Postfach 80 03 20**
**D-6230 Frankfurt/Main 80(DE)**

(72) Erfinder: **Münster, Gerhard, Dr.**
**Habichtsweg 1**
**D-6232 Bad Soden am Taunus(DE)**

(54) **Verfahren zur Herstellung von Ammoniumsulfamat.**

(57) Verfahren zur Herstellung von Ammoniumsulfamat aus Ammoniak und Schwefeltrioxid. Ammoniak und Schwefeltrioxid werden unter Druck in ein Gefäß eingeleitet, das eine im wesentlichen aus Ammoniumsulfamat und Ammoniumimidodisulfonat bestehende Schmelze enthält. Dabei wird ein Molverhältnis $NH_3/SO_3$ von 1,5:1 bis 2:1 eingehalten. Das entstehende Reaktionsprodukt hat die Zusammensetzung der vorgelegten Schmelze und wird abgezogen. Wesentlich ist, daß man Schwefeltrioxid in die Gasphase oberhalb der Schmelze einleitet.

EP 0 012 837 A1

Croydon Printing Company Ltd.

HOECHST AKTIENGESELLSCHAFT HOE 78/F 259    Dr.SP/Rp

Verfahren zur Herstellung von Ammoniumsulfamat

Die Erfindung betrifft ein Verfahren zur Herstellung von Ammoniumsulfamat aus Ammoniak und Schwefeltrioxid unter Druck.

Aus der DE-OS 19 15 723 und der DE-OS 27 10 399 sind bereits Verfahren bekannt geworden, bei denen das Reaktionsprodukt von Ammoniak und Schwefeltrioxid schmelzflüssig anfällt. Gemäß DE-OS 19 15 723 arbeitet man mit einem Ammoniaküberschuß, der vorzugsweise das zwei- bis vierfache der stöchiometrischen Menge beträgt, während beim Verfahren der DE-OS 27 10 399 ein Unterschuß an Ammoniak zur Anwendung kommt, und die sich über der Schmelze ansammelnden Gase nicht aus dem Reaktor entfernt werden.

Das Verfahren der DE-OS 19 15 723 hat den Nachteil, daß man das überschüssige Ammoniak aus dem Reaktor laufend abziehen muß, wobei durch mitgerissene Feststoffanteile die Leitungen und Armaturen rasch verstopfen. Nach dem Verfahren der DE-OS 27 10 399 reichern sich in der Gasphase über der Schmelze mit der Zeit Inertgase wie Stickstoff an, der durch thermische Zersetzung von Ammoniumsulfamat entstehen kann, so daß der Ammoniakpartialdruck abnimmt und der Gesamtdruck fortlaufend erhöht werden muß.

Es bestand daher die Aufgabe, ein Verfahren zur Herstellung von Ammoniumsulfamat zu finden, das die Nachteile der genannten Verfahren vermeidet.

Gegenstand der Erfindung ist ein Verfahren zur Herstellung von Ammoniumsulfamat durch Einleiten von Ammoniak und Schwefeltrioxid unter Druck in ein Gefäß, das eine im wesentlichen aus Ammoniumsulfamat und Ammoniumimidodisulfonat bestehende Schmelze enthält, unter Einhaltung eines Molverhältnisses $NH_3/SO_3$ von 1,5 : 1 bis 2,0 : 1 wobei Schwefeltrioxid in die Gasphase oberhalb der Schmelze eingeleitet wird. Dabei kann man die sich in der Gasphase mit der Zeit anreichernden Intertgase durch gelegentliches Entspannen des Druckreaktors aus der Gasphase entfernen.

Es ist zwar aus der DE-OS 1 915 723 bekannt, daß man $SO_3$ in den Gasraum einbringen kann, während $NH_3$ in die Schmelze eingeleitet wird. Es konnte jedoch nicht vorhergesehen werden, daß diese Maßnahme auch bei Abwesenheit eines Ammoniak-Überschusses vorteilhaft ist.

Das Verfahren wird bei einem Ammoniakdruck, der im wesentlichen dem Gesamtdruck entspricht, von 2 bis 30 bar, vorzugsweise von 5 bis 15 bar, durchgeführt. Höhere Drucke als 30 bar sind aus apparativen Gründen unwirtschaftlich, während bei Drucken unter 2 bar der Anteil an Ammonium-imidodisulfonat in der Schmelze auf Kosten des Ammoniumsulfamats stark zunimmt.

Es ist notwendig, das Schwefeltrioxid in den Gasraum oberhalb der Schmelze, die in der Regel zugleich das Reaktionsprodukt darstellt, einzuleiten. Schwefeltrioxid kann gasförmig oder vorzugsweise flüssig eingespeist werden. Die Einleitung des Schwefeltrioxids in die Schmelze (vgl. z.B. das Verfahren gemäß DE-OS 27 10 399) führt zu höheren Anteilen an Ammonium-imidodisulfonat, das durch Ammoniak nur langsam zu Ammoniumsulfamat umgesetzt wird. Mit zunehmender Menge an Ammonium-imidodisulfonat in der Schmelze steigt der Schmelzpunkt an, sodaß der Reaktorinhalt völlig fest werden kann. Gleichzeitig treten in erhöhtem Maße durch ungenügende Wärmeabfuhr Zersetzung und Nebenreaktionen ein.

Der Ort der Einleitung des Ammoniaks ist dagegen nicht kritisch. Es kann in die Schmelze oder in den Gasraum oder auch gleichzeitig in beide Phasen eingeleitet werden, wobei es sowohl gasförmig als auch flüssig zur Anwendung gelangen kann.

Das Mengenverhältnis, in dem sich Ammoniak und Schwefeltrioxid umsetzen, entspricht höchstens dem stöchiometrischen Verhältnis von 2 : 1, in dem diese im Hauptreaktionsprodukt Ammoniumsulfamat, vorliegen. Zur Einhaltung des Molverhältnisses $NH_3/SO_3$ von 1,5 : 1 bis 2,0 : 1 sind keine aufwendigen Maßnahmen notwendig, sondern es genügt hierzu bei einer vorgegebenen $SO_3$-Dosierrate und bei annähernd gleichbleibenden Druck im Reaktor Ammoniak in dem Maße zuströmen zu lassen, wie es durch die Reaktion verbraucht wird. Ein Teil des Ammoniaks löst sich in der Schmelze und entweicht beim Ablassen und Entspannen der Schmelze auf Normaldruck. Bei dem gelegentlichen Entspannen des Reaktors zur Entfernung der Inertgase treten Ammoniakverluste auf.

Das erfindungsgemäße Verfahren arbeitet bei Schmelze-Temperaturen von 120°-250°C, vorzugsweise von 180°-220°C. Im eigentlichen Reaktionsraum in der Gasphase treten jedoch Temperaturen bis 300°C auf. Trotzdem ist die Zersetzung und Bildung von Nebenprodukten wie Sulfat bei diesen Temperaturen überraschend gering. Die Reaktionswärme kann in bekannter Weise durch Mantelkühlung, Kühlschlangen oder Wärmetauscher abgeführt werden.

Eine besondere Ausführungsform des Verfahrens besteht darin, daß Apparaturen aus Edelstahl anstelle von kostspieligen Druckreaktoren aus emailliertem Stahl, Titan oder Hastelloy$^{(R)}$ C verwendet werden. Dies wird einerseits ermöglichst durch die relativ niedrigen Wandtemperaturen an den Stellen, die mit der Schmelze in Berührung stehen, und andererseits durch den Zusatz von geringen Mengen Salpetersäure oder eines anorganischen Nitrats, vorzugsweise von Ammoniumnitrat, als Korrosionsinhibitor. Die Zusatzmengen betragen ca. 0,01 bis 2 Gew.-%, bezogen auf die Schmelze. Man erhält auf diese Weise farblose, nach dem Erstarren nahezu weiße Produkte mit sehr geringen Schwermetallgehalten.

Das Verfahren wird vorzugsweise kontinuierlich durchgeführt, indem man in einen Druckreaktor, z.B. einen Rührkessel, die Reaktionskomponenten Ammoniak und Schwefeltrioxid sowie gegebenenfalls Ammoniumnitrat als Korrosionsinhibitor eindosiert und die Schmelze aus dem unteren Teil des Reaktors abzieht. Die Abführung der Reaktionswärme kann auch außerhalb des Reaktors in einem von der Schmelze im Kreislauf durchströmten Wärmetauscher erfolgen. Etwa sich anreichernde Inertgase werden nach Bedarf durch teilweises Entspannen abgeblasen.

0012837

Das Reaktionsprodukt enthält ca. 70 - 90 Gew.% Ammoniumsulfamat neben Ammonium-imidodisulfonat, Ammoniumsulfat
und etwas freiem Ammoniak. Es kann direkt als Herbizid
oder zur Herstellung von Amidosulfonsäure verwendet werden.

Die Erfindung wird durch die nachstehenden Beispiele
näher erläutert.

Beispiel 1

In einem 1 l-Rührautoklaven aus Edelstahl (W.Nr. 1.4571),
der mit einem Heiz- bzw. Kühlmantel und einem Bodenventil sowie mit Zuleitungen für Ammoniak und Schwefeltrioxid und einem Kugelhahn zum Entspannen des Gasraums versehen war, wurden 1157 g einer Schmelze aus
79 Gew.-% Ammoniumsulfamat, 13 Gew.-% Ammonium-imidodisulfonat und 8 Gew.-% Ammoniumsulfat sowie 6 g
Ammoniumnitrat vorgelegt und mit einem Ölumlaufthermostaten auf 200°C erwärmt. Nun wurde Ammoniak
aus einer Stahlflasche aufgepreßt, das durch ein in
die Schmelze tauchendes Rohr eingeleitet wurde. Hierbei
stellte sich über der Schmelze bei voll geöffnetem
Ammoniakventil ein Druck von 6 - 7 bar ein. Mittels
einer Membrandosierpumpe wurden nun in den Gasraum oberhalb der mit 200 $min^{-1}$ gerührten Schmelze 70 ml/h
flüssiges Schwefeltrioxid eindosiert. Die Temperatur
der Schmelze stieg dabei auf 220°C an. In halbstündigem
Abstand wurden jeweils etwa 100 - 150 g Schmelze durch
das Bodenventil abgelassen und in einer Edelstahlwanne
erstarren gelassen. Nach 4 h wurde die $SO_3$-Dosierung
auf 80 ml/h erhöht und nach weiteren 30 min auf 110 ml/h.
Im Gasraum wurden dabei vorübergehend Temperaturen
bis 280°C gemessen, sodaß die Temperatur des Ölumlaufthermostaten auf 180°C herabgesetzt wurde. 4 h nach
Beginn des Versuchs wurde durch kurzzeitiges Öffnen des
Kugelhahns der Gasdruck im Reaktor auf 3 bar erniedrigt,
um die Inertgase zu entfernen. Der Druck stieg anschließend sofort wieder auf den ursprünglichen Wert
von 6 - 7 bar an. Nach 5 h 45 min waren insgesamt 454 ml
$SO_3$ eindosiert worden und 1194 g Schmelze abgezogen
worden. Die im Reaktor verbliebene Menge an Schmelze
betrug 1180 g. Dieses Produkt besaß folgende Zusammensetzung: 76 Gew.% Ammoniumsulfamat, 14 Gew.% Ammonium-
imidodisulfonat und 10 Gew.% Ammoniumsulfat.

<u>Vergleichsbeispiel</u> (Einleitung von $SO_3$ in die Schmelze).

In der gleichen Apparatur wie in Beispiel 1 wurden 1200 g einer Schmelze aus reinem Ammoniumsulfamat sowie 6 g Ammoniumnitrat vorgelegt und auf 200°C erwärmt. Ammoniak aus einer Stahlflasche wurde in die Schmelze eingedrückt, wobei sich ein Druck von 7 - 8 bar im Gasraum einstellte. Nun wurden 80 ml/h flüssiges $SO_3$ durch ein abgetauchtes Rohr in die gerührte Schmelze eindosiert. Ein Temperaturanstieg der Schmelze wurde hierbei nicht beobachtet. Nach 1 h wurde versucht, eine Probe aus dem Bodenventil abzulassen, es lief jedoch kein Produkt aus. Die Manteltemperatur wurde daraufhin auf 220°C erhöht, und innerhalb einer weiteren Stunde weitere 80 ml flüssiges $SO_3$ eindosiert. Aber auch nach 2 h konnte kein Produkt entnommen werden. Deshalb wurde die $SO_3$-Dosierung abgestellt und der Autoklaveninhalt unter Rühren noch 3 h bei geöffnetem Ammoniakventil auf einem Druck von 7 - 8 bar und bei 220°C gehalten, um das vermutlich fest gewordene Produkt zu ammonolysieren und damit zu verflüssigen. Auch diese Maßnahme hatte keinen Erfolg. Der Autoklav wurde deshalb entspannt und der Deckel abgeschraubt. Innen befand sich eine pastenförmige Masse, die selbst bei 220°C nicht mehr fließfähig war. Dieses Produkt besaß folgende Zusammensetzung: 12 Gew.% Ammoniumsulfamat, 59 Gew.% Ammonium-imidodisulfonat, 20 Gew.% Ammoniumsulfat und 10 Gew.% freie Schwefelsäure (die wahrscheinlich als Ammoniumhydrogensulfat vorliegt.

Durch die Einleitung des $SO_3$ in die Schmelze trat offenbar eine örtliche Überhitzung an der Einleitungsstelle auf unter Bildung von Zersetzungsprodukten wie Sulfat und Inertgasen, die bei geschlossenem Gefäß den weiteren Zutritt von Ammoniak verhinderten.

Daß sich das Reaktionsprodukt aus dem Vergleichsbeispiel bei ausreichendem Ammoniakzutritt ammonolysieren läßt, wurde durch einen Versuch nachgewiesen, bei dem dieses Produkt gemahlen in den Autoklaven gefüllt und 4 h bei 200°C und 6 - 7 bar mit Ammoniak behandelt wurde. Nach dieser Zeit konnte es flüssig durch das Bodenventil aus dem Autoklaven abgelassen werden. Das ammonolysierte Produkt besaß folgende Zusammensetzung: 64 Gew.% Ammoniumsulfamat, 12 Gew.% Ammonium-imidodisulfonat und 23 Gew.% Ammoniumsulfat.

Beispiel 2

In der gleichen Apparatur wie in Beispiel 1 wurden 1158 g einer Schmelze aus 76 Gew.% Ammoniumsulfamat, 14 Gew.% Ammonium-imidodisulfonat und 10 Gew.% Ammoniumsulfat (Endprodukt von Beispiel 1) sowie 12 g Ammoniumnitrat vorgelegt und auf 200°C erwärmt. Durch Einleiten von Ammoniak aus einer Stahlflasche stellte sich ein Druck von 5,8 - 6,2 bar über der Schmelze ein. Nun wurden 130 ml/h flüssiges $SO_3$ in den Gasraum eindosiert. Bei einer Manteltemperatur von 180°C wurde in der Schmelze eine Temperatur von 200°C gemessen. In Abständen von jeweils 1 h wurden 300 - 500 g Schmelze durch das Bodenventil abgelassen. Nach 1 h wurde die $SO_3$-Dosierung auf 150 ml/h erhöht und nach einer weiteren Stunde auf 170 ml/h. Die Manteltemperatur wurde dabei auf 175°C erniedrigt, während die Temperatur der Schmelze auf 220° - 230°C anstieg. Nach 4 h 15 min waren insgesamt 665 ml $SO_3$ eindosiert worden und 1585 g Schmelze abgezogen worden. Die im Reaktor verbliebene Menge an Schmelze betrug 1048 g. Sie besaß folgende Zusammensetzung: 71 Gew.% Ammoniumsulfamat, 21 Gew.% Ammonium-imidodisulfonat und 7 Gew.% Ammoniumsulfat.

**Beispiel 3**

In der gleichen Apparatur wie in Beispiel 1 wurden 1065 g reines Ammoniumsulfamat und 12 g Ammoniumnitrat vorgelegt und auf 200°C erwärmt. Flüssiges Ammoniak wurde einer umgekehrten Stahlflasche mit dem Ventil nach unten entnommen und durch ein Einleitungsrohr, das am unteren Ende mit einem Rückschlagventil versehen war, in die Schmelze eingeleitet. In dem geschlossenen Autoklaven stellte sich ein Druck von 6 - 7 bar über der Schmelze ein, wobei das Rückschlagventil ein Zurücksteigen der Schmelze in die Ammoniakleitung verhinderte. Nun wurden in den Gasraum 140 ml/h flüssiges $SO_3$ eindosiert. Die Temperatur der Schmelze lag bei 200°C bei einer Manteltemperatur von 185°C. Der zusätzliche Kühleffekt des flüssigen Ammoniaks, das in dem Einleitungsrohr bereits teilweise verdampfte, war deutlich festzustellen. Die $SO_3$-Dosierung wurde deshalb nach 2 h auf 160 ml/h gesteigert und nach weiteren 30 min schließlich auf 200 ml/h. Die Temperatur der Schmelze stieg dabei auf 225°C bei einer Manteltemperatur von 168°C. Stündlich wurden etwa 300-600 g Schmelze abgezogen. Nach 3 h 30 min waren insgesamt 559 ml $SO_3$ eindosiert worden und 1209 g Schmelze abgezogen worden. Die im Reaktor verbliebene Menge an Schmelze betrug 1120 g. Sie besaß folgende Zusammensetzung: 68 Gew.% Ammoniumsulfamat, 23 Gew.% Ammoniumimidodisulfonat und 7 Gew.% Ammoniumsulfat.

Patentansprüche:

1) Verfahren zur Herstellung von Ammoniumsulfamat durch Einleiten von Ammoniak und Schwefeltrioxid unter Druck in ein Gefäß, das eine im wesentlichen aus Ammoniumsulfamat und Ammoniumimidodisulfonat bestehende Schmelze enthält, unter Einhaltung eines Molverhältnisses NH$_3$/SO$_3$ von 1,5 : 1 bis 2,0 : 1 das dadurch gekennzeichnet ist, daß man Schwefeltrioxid in die Gasphase oberhalb der Schmelze einleitet.

2) Verfahren nach Anspruch 1, dadurch gekennzeichnet, daß man das Ammoniak nach Maßgabe seines Verbrauches in das Gefäß strömen läßt.

3) Verfahren nach Anspruch 1, dadurch gekennzeichnet, daß man die Umsetzung bei einem Ammoniakdruck von 2 bis 30 bar durchführt.

4) Verfahren nach einem der Ansprüche 1 bis 3, dadurch gekennzeichnet, daß die Temperatur der Schmelze 120° - 250°C beträgt.

5) Verfahren nach einem der Ansprüche 1 bis 4, dadurch gekennzeichnet, daß man die Umsetzung in Apparaturen aus Edelstahl durchführt.

6) Verfahren nach Anspruch 5, dadurch gekennzeichnet, daß man die Umsetzung in Gegenwart von 0,01 bis 2 Gew.% Ammoniumnitrat in der Schmelze durchführt.

0012837

**Europäisches Patentamt**

**EUROPÄISCHER RECHERCHENBERICHT**

Nummer der Anmeldung
EP 79 10 4563

| | EINSCHLÄGIGE DOKUMENTE | | KLASSIFIKATION DER ANMELDUNG (Int Cl ³) |
|---|---|---|---|
| Kategorie | Kennzeichnung des Dokuments mit Angabe, soweit erforderlich der maßgeblichen Teile | Betrifft Anspruch | C 01 B 21/096 |
| D | FR - A - 2 383 124 (HOECHST AKTIEN-GESELLSCHAFT) <br> * Ansprüche 1-3 * <br> & DE - A - 2 710 399 <br><br> -- | 1-4 | |
| D | FR - A - 2 040 017 (FARBWERKE HOECHST A.G.) <br> * Ansprüche 1-4 * <br> & DE - A - 1 915 723 <br><br> -- | 1-4 | |
| | | | **RECHERCHIERTE SACHGEBIETE (Int Cl ³)** |
| A | US - A - 2 426 420 (ERNEST J. TAUCH) | | C 01 B 21/096 |
| A | FR - A - 968 161 (SPOLEK PRO CHEMICKOU A HUTNI VYROBU, NARODNI PODNIK) | | |
| A | FR - A - 2 124 590 (FARBWERKE HOECHST A.G.) | | |
| A | DE - C - 668 142 (I.G. FARBENINDUSTRIE AKTIENGESELLSCHAFT) <br><br> ---- | | |

**KATEGORIE DER GENANNTEN DOKUMENTE**

X. von besonderer Bedeutung
A: technologischer Hintergrund
O. nichtschriftliche Offenbarung
P. Zwischenliteratur
T: der Erfindung zugrunde liegende Theorien oder Grundsätze
E. kollidierende Anmeldung
D. in der Anmeldung angeführtes Dokument
L. aus andern Gründen angeführtes Dokument
&. Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-04-1980 | ASSOGNA |

EPA form 1503.1 06.78